# EUROPÄISCHE PATENTSCHRIFT

(11) **EP 1 816 938 B1**
(45) Veröffentlichungstag und Bekanntmachung des Hinweises auf die Patenterteilung: **08.09.2010**
(21) Anmeldenummer: 05786500.8
(22) Anmeldetag: 06.10.2005
(51) Int. Cl.: A47J 36/00, F16K 5/04

(54) **AUSLAUFVENTIL FÜR EIN KOCHGERÄT**
DISCHARGE VALVE FOR COOKING APPLIANCES
SOUPAPE DE VIDANGE POUR UN APPAREIL DE CUISSON

(30) Priorität: 07.10.2004 CH 16532004
(43) Veröffentlichungstag der Anmeldung: 15.08.2007
(73) Patentinhaber: Elro (Holding ) AG, 5620 Bremgarten (CH)
(72) Erfinder: STEIGER, Patrick, CH-5612 Villmergen (CH)
(74) Vertreter: Liebetanz, Michael
(86) Internationale Anmeldenummer: PCT/CH2005/000583
(87) Internationale Veröffentlichungsnummer: WO 2006/037253

(56) Entgegenhaltungen:
- CH-A5- 663 258
- FR-A- 1 211 080
- FR-A- 2 305 664

## Beschreibung

Die Erfindung betrifft ein Auslaufventil für ein Kochgerät mit einem zylindrischen Ventilgehäuse, das einen Einlass und einen Auslass aufweist, die in einem Winkel in der Nähe zu einem rechten Winkel zueinander angeordnet sind, mit einem in diesem Ventilgehäuse geführten Ventilkolben und mit einem mit dem Ventilkolben verbundenen Betätigungselement gemäss dem Oberbegriff des Anspuchs 1.

Ein Auslaufventil mit den Merkmalen des Oberbegriffs des Anspruch 1 ist aus der FR-A-2,305,664 bekannt.

Auf dem Gebiet der Grossküchentechnik sind verschiedene Auslaufventile der eingangs genannten Art bekannt. Diese dienen als seitlicher Abfluss aus einem Kochgerät. Die bekannten Ventile haben einen grossen Platzbedarf, das heisst, sie stehen über den Rand des jeweiligen Kochgeräts so weit über, dass sie für den Küchenbetrieb insbesondere zwei Nachteile aufweisen.

Der eine Nachteil ist der Platzbedarf an sich, der eine Küchenplanung erschwert. Da die Ventile zumeist in eine Höhe von unter 70 Zentimeter angeordnet sind, tritt ein weiterer wesentlicher Nachteil auf, der in der Gefahr für das Personal liegt, sich entweder an dem überstehenden Ventil zu stossen oder mit Kochgeräten, die sie eventuell tragen oder auf mit Rollen versehenen Wagen verfahren, das Auslaufventil zu beschädigen.

Ausgehend von diesem Stand der Technik liegt der Erfindung die Aufgabe zugrunde, ein Auslaufventil der eingangs genannten Art so auszugestalten, dass die oben genannten Nachteile gemindert oder gar vermieden werden.

Diese Aufgabe wird erfindungsgemäss bei einem Auslaufventil der eingangs genannten Art durch die kennzeichnenden Merkmale des Anspruchs 1 gelöst.

Damit ist ein einfach wartbares, platzsparendes Auslaufventil geschaffen worden.

Weitere vorteilhafte Ausführungsformen sind in den Unteransprüchen gekennzeichnet.

Nachstehend wird eine bevorzugte Ausführungsform der Erfindung beispielhaft an Hand der beigefügten Zeichnungen näher beschrieben. Es zeigen:
- Fig. 1: eine schematische Draufsicht eines an einem Kochgerät befestigten Auslaufventils gemäss der Erfindung,
- Fig. 2: eine teilweise geschnittene perspektivische Ansicht des Ventilgehäuses des Auslaufventils nach Fig. 1,
- Fig. 3: eine geschnittene Seitenansicht des Auslaufventils nach Fig. 1 aus Richtung des Auslaufrohrs gesehen,
- Fig. 4: eine geschnittene Seitenansicht des mittleren Bereichs des Auslaufventils nach Fig. 1,
- Fig. 5: eine Ansicht von unten auf ein anderes Ausführungsbei- spiel des Ausflussbereichs des Auslaufventils nach Fig. 1, und
- Fig. 6: einen Ausschnitt der Fig. 2 in einer vergrösserten An- sicht.

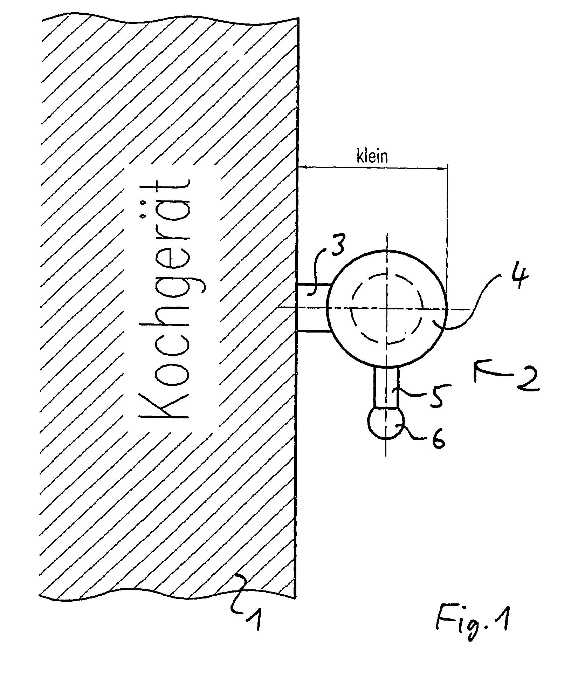

Die Fig. 1 zeigt eine schematische Draufsicht eines an einem Kochgerät 1 befestigten Auslaufventils 2 gemäss der Erfindung. Ein Anschlussrohr 3 geht in den Ventilgehäuse über, von dem in der Fig. 1 der Deckel 4 zu sehen ist. Dieser Deckel 4 ist mit dem Handgriff 5 verbunden, der in einer Bedienkugel 6 endet. Somit steht im wesentlichen nur der Durchmesser des Ablaufdurchmessers vor. Darüber hinaus ist die Schwenkbewegung des Handgriffes 5, die in der Zeichenebene der Fig. 1 stattfindet, vorteilhafterweise mit 180 Grad bemessen, so dass der Handgriff 5 im geschlossenen Zustand wie im offenen Zustand parallel zur Aussenwand des Kochgeräts 1 angeordnet ist und nicht seitlich übersteht.

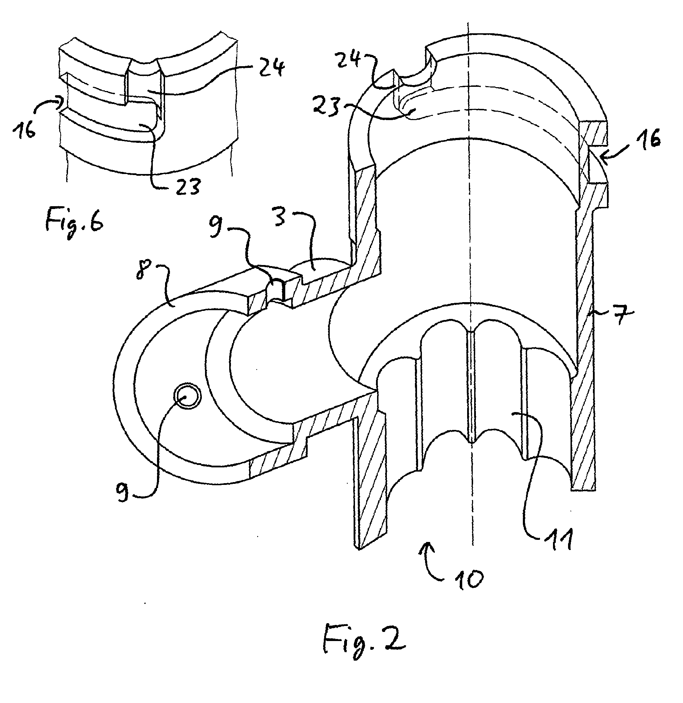

Die Fig. 2 zeigt eine teilweise geschnittene perspektivische Ansicht des Ventilgehäuses 7 des Auslaufventils 2 nach Fig. 1. Das Ventilgehäuse ist T-förmig und besteht aus dem vom Ansatz aus gesehen vorzugsweise leicht schräg ansteigend angeordneten Anschlussrohr 3, das in einem Flansch 8 endet, der auf einem dem Kochgerät 1 zugeordneten Auslaufrohr aufgesetzt werden kann. Durch beispielsweise drei Bohrungen 9, die ein Innengewinde aufweisen, wird das Anschlussrohr 3 auf einem solchen Anschlussstutzen montiert. Das Anschlussrohr 3 wird möglichst kurz ausgeführt, so dass der restliche Ventilgehäuse möglichst nahe am Kochgerät 1 positioniert ist.

Vorzugsweise ist dann die Ausflussöffnung 10 des Auslaufventils 2 nach unten ausgerichtet und ist schräg oder senkrecht nach unten offen. Im Bereich der Ausflussöffnung 10 weist das Ventilgehäuse 7 an seinem inneren Umkreis eine Reihe von beispielsweise acht aneinander angeordneten Auslaufsnuten 11 auf. Diese decken jeweils einen Winkelbereich von hier 45 Grad ab. Damit ist die Ausflussöffnung 10 mit einer strukturierten Wandung ausgestaltet, die einen Drall des auslaufenden Materials verhindert.

Der Winkel zwischen Einlass 3 und Auslass 10 weist einen Wert auf, der in der Nähe zu einem rechten Winkel liegt, das heisst, der beispielsweise zwischen 70 und 110 Grad liegt.

Im oberen Bereich des Ventilgehäuses ist auf der rechten Bildseite eine Nut 16 zu erkennen. Diese Nut 16 ist eine Führungsnut im Zusammenhang mit dem Handgriff 5 und erstreckt sich beispielsweise über 180 Grad, so dass der Handgriff 5 aus der in Fig. 1 dargestellten geschlossenen Stellung um 180 Grad gegen den Uhrzeigersinn verdreht werden kann, womit das Auslaufventil 2 vollständig geöffnet wird. Dies geht insbesondere auch im Zusammenhang mit der Fig. 6 hervor. Die Nut 16 endet in einem Bereich 23, wo sie L-förmig zum oberen Rand des Ventilgehäuses 7 abbiegt.

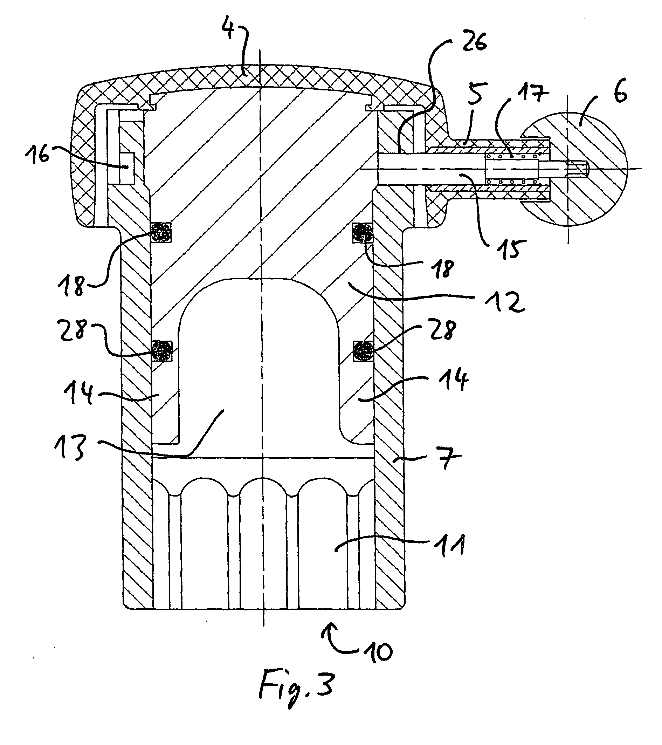

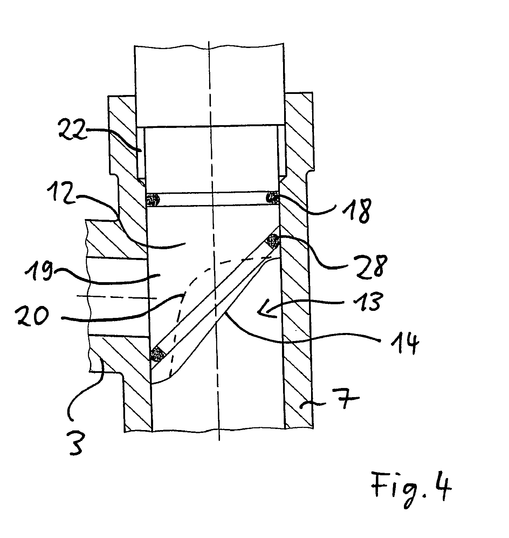

Die Fig. 3 zeigt eine geschnittene Seitenansicht des Auslaufventils 2 nach Fig. 1 aus Richtung des Auslaufrohrs gesehen. Es zeigt das Auslaufventil im geschlossenen Zustand. In dem hohlzylindrischen Ventilgehäuse 7 ist ein zylindrischer Ventilkolben 12 angeordnet, in dessen unterem Bereich 13 auf einer Seite ausgehöhlt ist. Links und rechts sind Ableitwände 14, zwischen denen auslaufendes Material nach unten umgelenkt wird. Die Auslaufsnuten 11 haben die wellenförmige Kontur, um eine Drallbewegung von auslaufender Flüssigkeit zu verhindern. Die aus dem Auslaufrohr 3 in den Bereich 13 einströmende Flüssigkeit wird dabei an der in der Fig. 4 dargestellten gekrümmten Kurve 20 der Sperrwand 19 umgeleitet.

Der Ventilkolben 12 ist mit dem Deckel 4 verbunden, der in den Handgriff 5 übergeht. Der Handgriff 5 ist hohl ausgestaltet nimmt einen Verriegelungskolben 15 auf. Der Verriegelungskolben 15 kann in einer Vertiefung 26 der Nut 16 festgehalten werden. Der Verriegelungskolben 15 stützt sich mit einer Feder 17 gegen eine Schulter des Handgriffs 5 ab und unterstützt somit eine Verriegelung. Der Verriegelungskolben 15 ist mit der Bedienkugel 6 verbunden, so dass durch einen Zug auf die Bedienkugel 6 der Verriegelungskolben 15 aus der Vertiefung 26 der Nut 16 gelöst wird, so dass das Auslaufventil 2 gedreht werden kann, dass heisst, Deckel 4 und Ventilkolben 12 werden als Einheit gedreht, wobei der Verriegelungskolben 15 in der Ringnut 16 gleitet. Dabei ist vorteilhaft, dass keinerlei translatorische Bewegung des Ventils 2 auftritt. Es handelt sich um eine reine Drehung. Die Nut 16 verläuft dabei über 180 Grad im oberen Bereich des Ventilgehäuses 7. Sie ist L-förmig, das heisst, neben der 180 Grad umfassenden horizontalen Ringnut 15 im Ventilgehäuse 7 besteht am Ort 23 der Ventil-Offen-Stellung eine nach oben gerichtete Nut 24, die am oberen Ende des Ventilgehäuses 7 mündet. Somit ist es dann nur in der Ventil-Offen-Stellung möglich, den Ventildeckel 4 mit dem Ventilkolben 12 zu Wartungszwecken abzuheben. Damit ist gewährleistet, das beim Abheben des Ventils ein eventueller Druck im Kochgerät 1 abgebaut ist. Die besagte Vertiefung 26 besteht in der dargestellten Ausführungsform nur in der Geschlossen-Stellung, sie kann aber auch sowohl in der Offen- als auch in der Geschlossen-Stellung vorgesehen sein. Es können auch weitere Arretierungspositionen für Zwischenstellungen vorgesehen sein. Insbesondere kann der nach oben gerichtete Abschnitt 24 der L-förmigen Nut 16 flacher ausgestaltet sein, wie in der Fig. 6 dargestellt, um den Benutzer für eine Demontage des Ventilkolbens 12 zu zwingen, den Verriegelungskolben weiter herauszuziehen, als für den Beginn einer Drehung in die Geschlossen-Stellung.

Damit sind in der Geschlossen-Stellung Verriegelungselemente 16 und 26 vorgegeben, die das Auslaufventil, insbesondere wenn das zugehörige Kochgerät mit Druck beaufschlagt ist, gegen ein Abheben des Ventilkolbens 12, insbesondere für Wartungsarbeiten, sichern.

In einer einfacheren alternativen Ausgestaltung ist eine Drehung in der Nut 16 immer möglich. Der Zug auf die Bedienkugel erlaubt es dann aber, den Verriegelungskolben 15 so herauszuziehen, dass Deckel 4 und Ventilkolben 12 aus Wartungszwecken in longitudinaler Richtung des Ventilgehäuses 7 aus diesem gezogen werden können.

Der Ventilkolben 12 wird gegen den Ventilgehäuse 7 durch zwei O-Ringe 18 und 28 abgedichtet. Die Fig. 4 zeigt eine geschnittene Seitenansicht des mittleren Bereichs des Auslaufventils nach Fig. 1 und damit insbesondere den Dichtbereich im geschlossenen Zustand des Ventils. Der obere Dichtring 18 verläuft horizontal in einer Nut im Ventilkolben 12. Der untere Dichtring 28 verläuft unten von einer Sperrwand 19 ausgehend elliptisch über die Seitenwände 14 bis in einen Bereich unterhalb des ersten Dichtringes 18. Das Ventil 2 ist in Fig. 4 im geschlossenen Zustand dargestellt, das heisst, dass die Sperrwand 19 dem Auslaufrohr 3 des Kochgeräts 1 zugewandt ist und dessen Durchmesser vollständig verschliesst. Die Sperrwand 19 verläuft in ihrem mittleren Bereich entsprechend der strichliniert dargestellten Kurve 20, die in der Zeichnung von der vorderen Ableitwand 14 verdeckt wird. Es ist vorteilhaft, dass das Ventilgehäuse 7 im oberen Bereich eine abgesetzte vergrösserte Bohrung 22 aufweist, die es gestattet, dass der Ventilkolben 12 leicht montierbar ist, was die Wartung vereinfacht. Er kann nämlich kraftlos in das Ventilgehäuse 7 vorgeschoben werden und wird dabei automatisch zentriert, bevor Reibungskräfte auf die O-Ringe wirken.

Aus den Fig. 3 und 4 ist ersichtlich, dass es in der offenen Stellung keine Verengung gibt, an der Kochgut im Auslaufventil 2 hängen bleiben könnte. Durch Drehen des Ventilkolbens 12 können prinzipiell auch Zwischenstellungen eingenommen werden, wobei dann Teile der Seitenwand 14 in den Ausflussweg hineinragen und die Ausflussmenge dosierbar ist. Es besteht dabei keine rückstellende Kraft auf die Betätigung, so dass das Auslaufventil als leichtgängig bezeichnet werden kann.

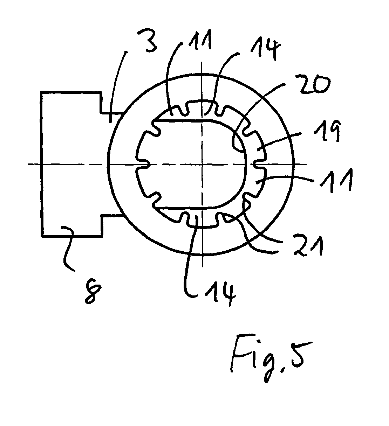

Die Fig. 5 zeigt eine Ansicht von unten auf ein anderes Ausführungsbeispiel des Ausflussbereichs des Auslaufventils 2 nach Fig. 1. Gleiche Merkmale sind jeweils in allen Zeichnungen mit den gleichen Bezugszeichen gekennzeichnet. Das Ventil 2 ist offen, die Sperrwand 19 ist auf der dem Auslaufrohr 3 gegenüberliegenden Seite und die Leitwände 14 führen seitlich zum Auslaufrohr 3 hin. Die Rippen 21 zwischen jeweils zwei Auslaufsnuten 11 sind auch deutlich zu erkennen. Die vertikal verlaufenden Rippen 21 sind hier mehr als radiale Fortsätze ausgestaltet und die Nuten 19 sind in ihrer Krümmung nicht gleichmässig konkav, sondern weisen an den Übergängen zu den radialen Fortsätzen 21 eine starke Krümmung auf. Die Funktion der Rippen 21 ist aber jeweils gleich, sie leiten und lenken den Kochgutstrahl senkrecht nach unten und stabilisieren ihn.

Insgesamt ergibt sich mit den nur zwei Dichtungsringen 18 und 28 eine geringe Reibung, so dass auch die Betätigungskraft für den Benutzer gering bleibt. Wie oben im Zusammenhang mit der Fig. 4 erwähnt, kann der Ventilkolben 12 leicht demontiert werden, so dass die O-Ringe 18, 28 leicht austauschbar sind. Auch wenn zur Vereinfachung der Zeichnung dies in der Fig. 4 nicht dargestellt ist, zentrieren die O-Ringe 18, 28 den Ventilkolben 12 in dem Ventilgehäuse 7 in einer Weise, dass der Ventilkolben 12 das Auslaufventilgehäuse 7 nicht berührt. Beide Teile 7 und 12 können daher in einer korrosionsfesten Lösung aus Chrom-Nickel-Stahl hergestellt werden. Vorteilhafterweise ist zur Vermeidung von Schmutzfugen der Deckel 4 aus Kunststoff direkt auf den Ventilkolben 12 aufgespritzt.

## Patentansprüche

1. Auslaufventil (2) für ein Kochgerät (1) mit einem zylindrischen Ventilgehäuse (7), das einen Einlass (3) und einen Auslass (10) aufweist, die in einem Winkel in der Nähe zu einem rechten Winkel zueinander angeordnet sind, mit einem in diesem Ventilgehäuse (7) geführten Ventilkolben (12) und mit einem mit dem Ventilkolben (12) verbundenen Betätigungselement (5, 6), wobei der Ventilkolben (12) über eine seitliche, dem Einlass (3) zu ausrichtbare, und dem Auslass (10) gegenüber ausgerichtete Ausnehmung (13) verfügt, die von einer Sperrwand (19) und zwei an die Sperrwand grenzenden Leitwänden (14) umgeben ist, und dass ein erstes Dichtelement (28) vorgesehen ist, dass sich in einer im wesentlichen elliptischen Form in einer Nut von dem unteren Bereich der Sperrwand (19) über die angrenzenden Leitwände (14) bis in den zylindrischen Kolbenbereich des Ventilkolbens (12) erstreckt, **dadurch gekennzeichnet, dass** der Auslass (10) über eine strukturierte Wandung (11, 21) mit in den Auslass (10) ragenden Fortsätzen (11, 21) verfügt.

2. Auslaufventil (2) nach Anspruch 1, **dadurch gekennzeichnet, dass** die strukturierte Wandung (11, 21) über eine Vielzahl von längs des zylindrischen Ventilgehäuses (7) verlaufenden Auslaufnuten (11) verfügt, wobei in den Auslass (10) ragende Fortsätze (11, 21) durch die Übergänge zwischen benachbarten Auslaufnuten (11) gebildet sind.

3. Auslaufventil (2) nach Anspruch 1, **dadurch gekennzeichnet, dass** Fortsätze (11, 21) der strukturierten Wandung (11, 21) durch radial ausgerichtete und längs des zylindrischen Ventilgehäuses (7) verlaufende Rippen (21) gebildet sind.

4. Auslaufventil (2) nach einem der Ansprüche 1 bis 3, **dadurch gekennzeichnet, dass** der Ventilkolben (12) im Bereich über dem ersten Dichtelement (28) eine Umkreisnut aufweist, in die ein zweites umkreisförmig angeordnetes Dichtelement (18) angeordnet ist, wobei die Dichtelemente (18, 28) vorteilhafterweise O-Ringe sind.

5. Auslaufventil (2) nach Anspruch 4, **dadurch gekennzeichnet, dass** die Dichtelemente (18, 28) über den Zylindermantel des Ventilkolbens (12) überstehen und den Ventilkolben (12) gegenüber dem Ventilgehäuse (7) berührungsfrei lagern.

6. Auslaufventil (2) nach einem der Ansprüche 1 bis 5, **dadurch gekennzeichnet, dass** das Betätigungselement (5, 6) einen Handgriff (5, 6) umfasst, der in der Offen-Stellung parallel zum Kochgerät (1) angeordnet ist, der durch eine Drehung über 180 Grad in eine Geschlossen-Stellung verdrehbar ist, so dass er in der Geschlossen-Stellung ebenfalls parallel zum Kochgerät (1) angeordnet ist, wobei das Auslaufventil (2) in der Geschlossen-Stellung durch Verriegelungselemente (16; 26) gegen ein Abheben des Ventilkolbens (12), insbesondere für Wartungsarbeiten, sicherbar ist.

## Claims

1. Discharge valve (2) for a cooking appliance (1), having a cylindrical valve housing (7) which has an inlet (3) and an outlet (10), which are arranged at an angle of approximately 90° in relation to one another, having a valve piston (12) guided in this valve housing (7), and having an actuating element (5, 6) connected to the valve piston (12), wherein the valve piston (12) has a lateral aperture (13) which can be aligned in relation to the inlet (3), is aligned in relation to the outlet (10) and is enclosed by a blocking wall (19) and two directing walls (14) adjacent to the blocking wall, and wherein a first sealing element (28) is provided, this sealing element extending in essentially elliptical form in a groove from the bottom region of the blocking wall (19), via the adjacent directing walls (14), into the cylindrical region of the valve piston (12), **characterized in that** the outlet (10) has a structured wall (11, 21) with extensions (11, 21) projecting into the outlet (10).

2. Discharge valve (2) according to Claim 1, **characterized in that** the structured wall (11, 21) has a multiplicity of discharge grooves (11) running longitudinally along the cylindrical valve housing (7), wherein extensions (11, 21) projecting into the outlet (10) are formed by the transitions between adjacent discharge grooves (11).

3. Discharge valve (2) according to Claim 1, **characterized in that** extensions (11, 21) of the structured wall (11, 21) are formed by radially oriented ribs (21) running longitudinally along the cylindrical valve housing (7).

4. Discharge valve (2) according to one of Claims 1 to 3, **characterized in that** the valve piston (12), in the region above the first sealing element (28), has an encircling groove into which is inserted a second encircling sealing element (18), the sealing elements (18, 28) advantageously being O-rings.

5. Discharge valve (2) according to Claim 4, **characterized in that** the sealing elements (18, 28) project beyond the lateral cylinder surface of the valve piston (12) and cause the valve piston (12) to be mounted in a contact-free manner in relation to the valve housing (7).

6. Discharge valve (2) according to one of Claims 1 to 5, **characterized in that** the actuating element (5, 6) comprises a handle (5, 6) which, in the open position, is arranged parallel to the cooking appliance (1) and can be rotated into a closed position by rotation over 180 degrees, and therefore, in the closed position, the handle is likewise arranged parallel to the cooking appliance (1), wherein the discharge valve (2), in the closed position, can be secured by locking elements (16; 26) against lifting of the valve piston (12), in particular for maintenance purposes.

## Revendications

1. Soupape de vidange (2) pour un appareil de cuisson (1) comprenant un boîtier de soupape cylindrique (7), qui présente une entrée (3) et une sortie (10), qui sont disposées l'une par rapport à l'autre suivant un angle proche de l'angle droit, avec un piston de soupape (12) guidé dans ce boîtier de soupape (7), et avec un élément d'actionnement (5, 6) connecté au piston de soupape (12), le piston de soupape (12) disposant d'un évidement (13) latéral, pouvant être orienté vers l'entrée (3) et orienté à l'opposé de la sortie (10), qui est entouré par une paroi de blocage (19) et deux parois de guidage (14) adjacentes à la paroi de blocage, et un premier élément d'étanchéité (28) étant prévu, lequel s'étendant sous forme essentiellement elliptique dans une rainure depuis la région inférieure de la paroi de blocage (19) sur les parois de guidage adjacentes (14) jusque dans la région de piston cylindrique du piston de soupape (12), **caractérisée en ce que** la sortie (10) dispose d'une paroi structurée (11, 21) avec des saillies (11, 21) pénétrant dans la sortie (10).

2. Soupape de vidange (2) selon la revendication 1, **caractérisée en ce que** la paroi structurée (11, 21) dispose d'une pluralité de rainures de vidange (11) s'étendant le long du boîtier de soupape cylindrique (7), des saillies (11, 21) pénétrant dans la sortie (10) étant formées par les transitions entre des rainures de vidange adjacentes (11).

3. Soupape de vidange (2) selon la revendication 1, **caractérisée en ce que** des saillies (11, 21) de la paroi structurée (11, 21) sont formées par des nervures (21) orientées radialement et s'étendant le long du boîtier de soupape cylindrique (7).

4. Soupape de vidange (2) selon l'une quelconque des revendications 1 à 3, **caractérisée en ce que** le piston de soupape (12) présente, dans la région au-dessus du premier élément d'étanchéité (28), une rainure périphérique dans laquelle est disposé un deuxième élément d'étanchéité (18) disposé de manière périphérique, les éléments d'étanchéité (18, 28) étant avantageusement des joints toriques.

5. Soupape de vidange (2) selon la revendication 4, **caractérisée en ce que** les éléments d'étanchéité (18, 28) dépassent au-delà de l'enveloppe cylindrique du piston de soupape (12) et supportent le piston de soupape (12) sans contact par rapport au boîtier de soupape (7).

6. Soupape de vidange (2) selon l'une quelconque des revendications 1 à 5, **caractérisée en ce que** l'élément d'actionnement (5, 6) comprend une poignée (5, 6) qui est disposée dans la position d'ouverture parallèlement à l'appareil de cuisson (1), qui peut être tournée dans une position fermée par une rotation de 180°, de sorte qu'elle soit disposée dans la position fermée également parallèlement à l'appareil de cuisson (1), la soupape de vidange (2) pouvant être fixée dans la position fermée par des éléments de verrouillage (16 ; 26) pour empêcher le piston de soupape (12) de se soulever, notamment pour des travaux d'entretien.
